# EUROPEAN PATENT SPECIFICATION

(11) **EP 3 301 016 B1**
(45) Date of publication and mention of the grant of the patent: **23.12.2020**
(21) Application number: 16178259.4
(22) Date of filing: 06.07.2016
(51) Int. Cl.: B64C 3/56, B64C 5/08, B64C 23/06

(54) **AIRCRAFT WITH LOAD REDUCING WING LIKE ELEMENT**
FLUGZEUG MIT LASTVERRINGERNDEM FLÜGELARTIGEM ELEMENT
AÉRONEF ÉQUIPÉ D'UN ÉLÉMENT DE TYPE AILE DE RÉDUCTION DE CHARGE

(43) Date of publication of application: 04.04.2018
(73) Proprietor: Airbus Operations GmbH, 21129 Hamburg (DE); Deutsches Zentrum für Luft- und Raumfahrt e.V., 51147 Köln (DE)
(72) Inventor: THEURICH, Frank, 21129 Hamburg (DE); HIMISCH, Jan, 38114 Braunschweig (DE)
(74) Representative: LKGLOBAL Lorenz & Kopf PartG mbB Patentanwälte

(56) References cited:
- EP-B1- 2 610 169
- WO-A1-2014/118508
- DE-A1- 10 313 290
- US-A1- 2006 049 307
- US-A1- 2016 176 506

## Description

### TECHNICAL FIELD

The invention relates to an aircraft with a fuselage, a wing attached to the fuselage, a wing tip device attached to a wing and at least one wing like element.

### BACKGROUND OF THE INVENTION

A widespread use of large wing tip devices on aircraft has the effect of increased structural loads, which lead to additional bending moments in the wing region, particularly in the wing root region. The reduction or prevention of increased maximum loads on the aircraft, especially under the influence of gusts or severe manoeuvring, may be achieved through load alleviation systems. These may include adjustable control surfaces, located at wing trailing edges or further forward wing sections. Integration of these control surfaces into wing-tip-devices is another possible approach.

However, due to the fact that wing tip devices are often greatly curved upwards, which leads to the control surfaces acting at a rather large angle to a horizontal plane, an effective lever arm relative to the wing root is reduced compared with control surfaces arranged at further inboard locations on a wing. Further, modern wing tip devices are often provided with great transitional arcs and have only small planar areas or none at all. Planar areas, however, are necessary for the integration of these common types of control surfaces.

Still further, the integration of relatively large control surfaces may be hindered through small profile depths and thicknesses that are often advantageous with respect to the aerodynamic performance.

EP 2 610 169 B1 shows a wing tip device for an outboard end of a wing having an upwardly projecting wing-like element with a planar portion and an arcuate transition portion, to which a lower wing-like element is rigidly attached and projects downwards, while an included angle between the upper and lower wing-like elements at an intersection on the outboard side of the wing tip device in the spanwise direction is less than, or equal to, 160 degrees.

WO 2014/118508 A1 shows an aircraft comprising a wing, the end of the wing having a wing tip device, wherein the wing tip device comprises a moveable region that is foldable rearwardly behind the wing such that the ground clearance of the wing tip device is increased.

US 2016/176506 A1 discloses an arrangement of lifting surfaces including a primary lifting surface having a flexural axis extending in the spanwise direction of the lifting surface, a root, and a tip. A first tip device is attached to the tip and has a first lifting surface. A second tip device is attached to the tip and has a second lifting surface. A control system is coupled to the first and second tip devices for moving the first and second lifting surfaces relative to the tip or for actively controlling circulation of the first and second lifting surfaces, such that a value of torque effective at the primary lifting surface about the flexural axis is changed.

US 2006/049307 A1 shows a flow-mechanically effective surface, such as a wing of an aircraft, wherein the surface comprises an elastic axis extending in the span direction of the surface and an adjustable control surface. The surface is elastically deformable in a bending direction and/or in a direction about the elastic axis, depending on the adjustment of the control surface while changing the induced flow-mechanical resistance. A control and/or regulating arrangement for the adjustment of the control surface in the sense of a minimization of the induced flow-mechanical resistance of the surface is provided.

DE 103 13 290 A1 shows a wing having a movable wing-like element attached to a wing end through a spring device.

### SUMMARY OF THE INVENTION

It is an object of the invention to propose a device or a system integratable into an aircraft that is capable of reducing the loads acting on the aircraft structure, particularly the loads associated with the integration of the wing tip devices, which device or system should be as simple as possible and be passive or non-active.

The object is met by an aircraft having the features of independent claim 1. Advantageous embodiments and further improvements may be gathered from the sub-claims and the following description.

It is proposed an aircraft comprising a fuselage, a wing attached to the fuselage, a wing tip device attached to a wing end of the wing, at least one additional wing-like element having a wing root, a wing leading edge and a wing trailing edge, and a passive torque control device having a rotatable interface means, wherein the torque control device is adapted for rotatably supporting the wing root of the wing-like element on the interface means under creation of a rotational axis extending from the interface means into the wing-like element, about which rotational the wing-like element is rotatable, wherein the wing-like element is adapted to induce a rotation around the rotational axis in an air flow, wherein the torque control device is adapted to limit the degree of rotation depending on a torque introduced into the interface means by the wing-like element. The wing root of the at least one wing-like element is coupled with the wing tip device through the torque control device such that the leading edge extends into an airflow surrounding the aircraft.

The aircraft may be realized as a commercial aircraft or a transporter aircraft, which may comprise a central, longitudinal fuselage and a main wing attached thereto or which may be designed as a blended wing body. For improving the aerodynamic characteristics, the wing comprises a wing tip device attached to a wing end of the wing. The design and dimensions of the wing tip device depends on the intended service of the aircraft and may include a variety of different types. For example, aircraft for mid and long range service may comprise a relatively large wing tip device, which is strongly swept in an upward direction and which comprises a relatively large transition section between a wing end and a planar winglet that extends at an angle to the wing.

The additional wing-like element constitutes a kind of a small additional wing attached to one or a plurality of suitable positions of the aircraft. Hence, it may be attached to one or all wing tip devices of the aircraft, preferably in a symmetrical fashion about an x-z-plane of the aircraft. For example, two wing-like elements may be attached to two wing tip devices on the ends of two wing halves of a wing. Additionally, one or two wing-like elements may be attached to one lateral side or two opposite lateral sides of a fuselage. Still further, but not covered by the scope of the claims, additionally one or two wing-like elements may be attached to one wing half or two opposite, preferably symmetrical lateral positions of two wing halves, respectively.

The wing-like element may be an essentially planar component or may comprise a shape that is curved at least in one direction. The overall shape of the winglet device may be rectangular, trapezoidal, triangular or any combination of these shapes, wherein the delimiting edges, such as the leading edge and the trailing edge, may be rounded or comprise an otherwise distinct curvature.

The torque control device constitutes an apparatus, which is arranged in a structurally fixed position on the aircraft and which enables an additional wing-like element to rotate by means of the rotatable interface means when attached thereto. The allowed degree of rotation depends on the torque that acts on the interface means, which torque results from the aerodynamic force acting on the additional wing-like element depending on its size and shape as well as on the location and orientation of the rotational axis. Further, the degree of rotation depends on the characteristics or behaviour of the torque control means, which influences the rotation of the interface means as a reaction on the torque introduced by the wing-like element. The torque control means are realized as a passive device, which may be based on a spring arrangement. This leads to a simplified design of the torque control means and the arrangement of a winglet device on the aircraft.

The orientation of the rotational axis may be defined depending on the aircraft principal axes, as e.g. defined in ISO 1151-2 with the longitudinal (x) axis, or roll axis, being drawn through the fuselage of the aircraft from tail to nose in the normal direction of flight, the lateral (y) axis running from the left to the right in piloted aircraft and parallel to the wings and the normal (z) axis, or yaw axis, extending from top to bottom and perpendicular to the other two axes. An x axis of the wing-like element, which is named "auxiliary x-axis" hereinafter, may be arranged parallel to the x-z-plane of the aircraft coordinate system and may extend along the chord axis of the wing-like element. An auxiliary y-axis is arranged perpendicular to the auxiliary x-axis and lies in a plane, which is spanned up by a tangent of an inner point of the leading edge wing-like element and an inner point of the trailing edge. An auxiliary z-axis is arranged perpendicular to both the auxiliary x-axis and the auxiliary y-axis. The rotational axis may be placed in the auxiliary x-y-plane and may exemplarily be parallel to the auxiliary y-axis, depending on the design of the wing root of the wing-like element and the transition to the installation position of the wing-like element on the aircraft.

When exposed to an air flow, the wing-like element inter alia produces a lift force acting on the aircraft. Particularly with an installation position on a wing tip device, such that the wing-like element also extends into a spanwise direction, the wing-like element may have a relatively large lever-arm with respect to the wing root of the main wing of the aircraft. Hence, a lift force generated by the wing-like element leads to the introduction of a moment on the whole wing.

By allowing a certain rotation around the rotational axis the aerodynamic lift depends on the rotational position of the wing-like element. Hence, the wing-like element may also act as a control surface for the use as or in a load reduction system. When the aircraft conducts a pull up manoeuvre or experiences a gust, such as a strong upwind, the angle of attack of the wing-like element may increase leading to an increase in circulation and therefore lift on the wing and the wing-like element. The lift on the wing-like element leads to the creation of a lift-dependant non-constant torque on the rotational axis if the aerodynamic center of the wing-like element is not on the rotational axis of the wing-like element and the interface means. Through a resulting rotation of the wing-like element about the rotational axis, the angle of incidence of the wing-like element decreases, if the rotational axis is appropriately chosen. The circulation created by the wing-like element will in turn then decrease substantially, which leads to decreasing the total load on the aircraft. The same effect but with inversed geometrical- and force- directions will be achieved with the same setup for downwinds as well.

If considering a flexible sweptback wing, a reduced circulation on the wing-like element may lead to an increase of total aircraft load. If in that case the torque onto the outer wing generated by the wing like element decreases, the twist distribution of the wing may be influenced in a way that the load distribution of the wing is shifted outboard compared to an aircraft having no or a fixedly mounted wing-like element. In this case it may be beneficial to locate the rotational axis behind the aerodynamic center relative to the leading edge.

Which of both effects occur, depends on e.g. the stiffness of the wing, the sweep of the wing, the chordwise position of the wing-like element and the geometric form or shape of the wing-like element. In case of the later described effect a reduced total load of the aircraft may be achieved by choosing the position of the rotational axis of the wing-like element in such way, that an increase in aircraft angle of attack will increase the angle of incident of the wing-like element.

Hence, the rotatably mounted wing-like element allows to reduce the structural load on the aircraft in certain conditions due to its simple adaption to air flow parameters.

As the wing-like element and the torque control means in combination are set up to let the wing-like element conduct a rotation it is appreciated that the wing-like element assumes different angles in different flight or operating phases. For example, the wing-like element may be in a first angle, i.e. a relaxed, neutral position on ground, when essentially no air flow is present. During a normal cruise flight with predictable smooth air flow in the absence of gaps the wing-like element may assume a second angle, which depends on the actual flight speed, the altitude as well as the momentary weight of the aircraft, which influence the flight parameters of the aircraft. The second angle may be in a rather close range of possible angles. The wing-like element as well as the torque control means should be designed to produce a minimum total drag for this operating state. Further, during other, more dynamic operating states, e.g. when experiencing downwinds, upwinds or when certain manoeuvres are conducted, the wing-like element assumes at least one third angle, wherein the wing-like element as well as the position of the rotational axis and the components of the torque control means should be designed so as to reduce the load on the aircraft. This may exemplarily be the reduction of rise of lift.

In a preferred embodiment, the rotational axis extends essentially perpendicular to the wing root of the wing-like element. The rotational axis preferably extends through the whole interior of the at least one wing-like element. The rotatability of the at least one wing-like element may be realized similar to the rotatability of canard wings, e.g. on fighter aircraft.

Still further, the rotational axis may extend through a point in a distance to the aerodynamic center of the wing-like element relative to the leading edge. The aerodynamic center is the point around which the coefficient of momentum is constant with respect to the angle of attack and therefore the lift. If the rotational axis is in front of the aerodynamic center, i.e. further to the leading edge or upstream, respectively, an increase in lift on the wing-like element will increase the torque which will move the trailing edge in the direction of the aerodynamic force, while the leading edge will move in an opposite direction. The amount of such a movement is depending on the layout of the counteracting torque control means. However, the rotational axis may in some cases also extend through a point behind the aerodynamic center, i.e. further to the trailing edge or downstream. The position of the rotational axis in relation to the aerodynamic center is subject to considerations based on the detail design of the aircraft. As a rough measure, the rotational axis may be placed forward of the aerodynamic center in case the wing comprises a rather low flexibility or elastic deformability, while the position of the rotational axis behind the aerodynamic center may be beneficial in case the wing has a high flexibility or elastic deformability.

Staying at the example of considering a location of the rotational axis forward of the aerodynamic center, a reduction of the angle of incidence resulting from a momentary increase of lift on the wing-like element will reduce the load on the wing-like element. To achieve an effect as explained above, an increase in the load on the wing-like element has to decrease a torque around the rotational axis of the wing like element, which is to be achieved by positioning the axis of rotation in front of the aerodynamic center of the wing-like element. While the positive direction of torque around the rotational axis is defined by the y-axis of the wing-like element, which is nearly parallel to the rotational axis of the wing-like element, which is defined to extend in the direction from the root of the wing-like element to the wing-tip of the wing like element, a positive torque or rotation is defined by applying the right hand rule onto this axis. As a result the angle of incidence of the wing-like element to exemplarily the outer wing or wing tip device will decrease while the load on the wing-like element increases due to an increase of aircraft angle of attack. This will lead to a smaller increase of load on the wing-like element over the aircraft angle of attack compared to a fixed junction. However, this may be different in aircraft designs with a distinctly higher flexibility or elastic deformability of the wing, in which the position of the rotational axis may be chosen to be behind the aerodynamic center, since bending effects of the wing require a different direction of the load introduced by the wing-like element into the wing structure.

In an advantageous embodiment, the distance to the aerodynamic center is at least 5% of a chord of the wing root of the wing-like device. Depending on the size, design and position of the wing-like element a more or less lever arm is required for creating a torque around the rotational axis by the lift generated essentially at the aerodynamic center. While 5% may be a rather low measure for a lever arm, the distance may also be chosen to be in a range between 5% and 25% and, preferably, between 5% and 20% and particularly between 7,5% and 15%.

In an advantageous embodiment, the torque control device comprises at least one spring coupled with the rotatable interface means and a structurally fixed point of the aircraft in a manner that a rotation of the rotatable interface means leads to compression or expansion of the at least one spring. According to Hooke's law the force needed to extend or compress a spring by a distance is proportional to that distance. Depending on the stiffness of the spring, a relation between extension or compression and the force can be set. By using a spring arrangement coupled with the interface means, the rotation of the wing like element may passively be determined. The spring arrangement may include a longitudinal or a rotary spring. If desired, the spring may also comprise a progressive characteristic, with which the relation between extension or compression and the force is not proportional.

To avoid flutter, the torque control device further comprises a damping unit in a parallel connection to the spring. The damping unit may comprise an oil damper, which is coupled with the interface means and which counteracts torque peaks introduced into the interface means through viscous drag. The damping unit may be realized in form of a compact spring-damping-unit, in which the spring and the damping unit constitute an integral component.

When using such a passive torque control means having a spring and damper system, it is required to choose the combination of position of the rotational axis, the size of the surface area of the wing-like element as well as the layout or design of the spring and damper system in such way, that in order to provide a performance benefit, the wing-like element provides a sufficient amount of loading in a steady state flight for the most momentary aircraft weights. This is achievable by using a reasonably stiff spring or by adjusting the spring damper system through an adjustable damper. Nevertheless the spring damper system needs to be flexible enough to allow a sufficient rotation to enable a satisfying change of incidence angle while the aircraft is experiencing a relevant load case.

As an alternative, example, not covered by the claims, the torque control device may comprise an actuator mechanically coupled with the interfacing means and a control unit, wherein the control unit is connected to the actuator and is adapted for rotating the interfacing means depending on a physical parameter indicative of the torque acting upon the rotatable interface means. The control unit may simply implement a certain control logic derived from or transferred by a load alleviation system already present in the aircraft. The control unit may constitute a part of a flight control computer or be an independent unit coupled with a suitable control command source.

Preferably, the control unit may be adapted for rotating the wing-like element depending on a physical parameter indicative of a torque acting upon the actuator. The physical parameter may be derived from a sensor arrangement coupled with the interface means for measuring a torque acting thereupon. The actuator may be realized as an electric motor, particularly as a step motor, which are configured so as to output a torque value. Hence, the control unit as well as the torque control means will be completely independent from any other control means integrated into the aircraft.

It is advantageous if the at least one wing like element is arranged in a transition region of a wing tip device. Consequently, a moment deriving from the lift force exerted on the wing-like element may act on the whole structure of the wing.

In a further advantageous embodiment, the wing comprises two wing halves, or wing sides, respectively, wherein each wing half comprises a wing tip device and wherein both wing tip devices comprise at least one wing-like element.

It is preferred that, when the wing-like element is arranged on the transition region of the wing tip device making use of the flexibility in bending of the wing, that at least in cruise flight the wing-like element extends over the wing tip device in a spanwise direction. This is beneficial when used as a load alleviation or load control means, since the lever arm on the main wing of the aircraft will be as large as possible.

Further, it may be preferred that on the ground the wing-like element essentially does not extend over the wing tip device. This allows to optimize the aircraft in terms of wingspan limitations on ground, since the wing-like element exceeds the wing tip device in span only during flight due to elastic deformation of the wing.

The rotational axis of the at least one winglet device may extend at an angle of at least 10° to a vertical and of at least 10° to a horizontal plane of the aircraft. Hence, the rotational axis of the wing-like element may assume an angle of 100° to 170° to the lateral extension, i.e. the y-axis of the aircraft.

Preferably, the rotational axis of the at least one wing-like element extends perpendicular to a longitudinal axis of the aircraft, which essentially leads to a uniform sweep angle of the leading edge of the wing-like device independent of the degree of rotation.

Further, the aircraft according to the invention may comprise a wing-like element at a forward portion of the fuselage forward of the wing. A control of the angle of incidence of such a canard is beneficial as it reduces the effects of gusts onto the aircraft if fitted with a canard. It goes without saying, that the wing-like element in this embodiment may comprise a rotational axis, which may be arranged parallel to the lateral (y) axis of the aircraft, in a slightly upward direction or a slightly downward direction, i.e. in a range of about 15°-20° in either direction of the horizontal (y) axis of the aircraft.

In accordance with the above description and under consideration of all possible combinations of features stated in the above description, a use of a rotatable wing-like element coupled with at least one of a wing tip device and a fuselage of an aircraft and having a leading edge extending into a flow of the aircraft for temporarily reducing a load on the aircraft by conducting an air flow induced rotation around a rotational axis extending through the wing-like element, wherein the degree of rotation is limited depending on a torque created on a wing root of the wing-like element is advantageous.

### BRIEF DESCRIPTION OF THE DRAWINGS

Other characteristics, advantages and potential applications of the present invention result from the following description of the exemplary embodiments illustrated in the figures. In this respect, all described and/or graphically illustrated characteristics also form the object of the invention individually and in arbitrary combination regardless of their composition in the individual claims or their references to other claims. Furthermore, identical or similar objects are identified by the same reference symbols in the figures.
Fig. 1a and 1b show a part of a wing with a wing-like element attached to a transition region of a wing tip device in two different three-dimensional views.
Fig. 2 shows a wing-like element in a top view.
Fig. 3a and 3b show a detail of a connection of a wing-like element and a torque control means in an aircraft structure.
Figs. 4a and 4b show different torque control means in schematic illustrations.
Fig. 5 shows an aircraft having a plurality of wing-like elements attached to it.

### DETAILED DESCRIPTION OF EXEMPLARY EMBODIMENTS

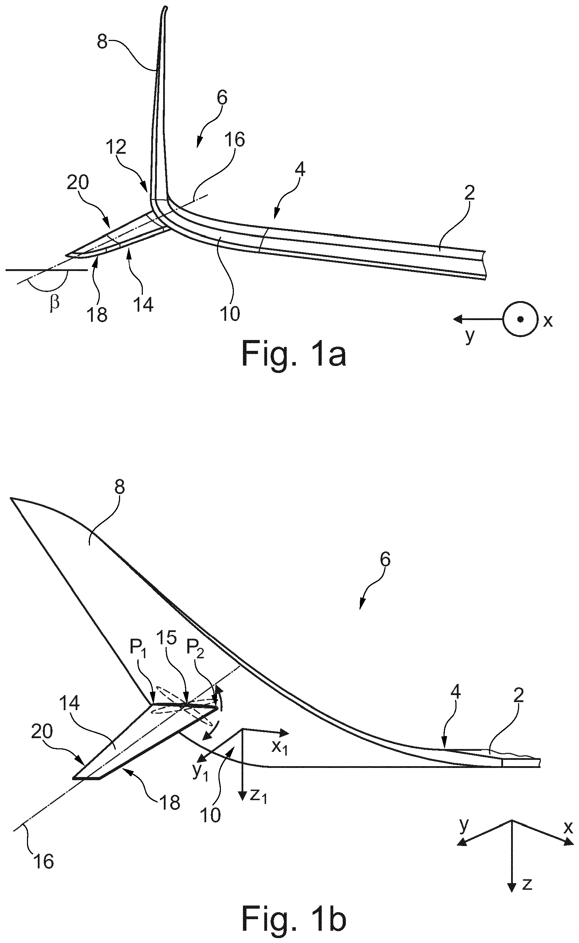

Fig. 1a shows a wing 2 attached to a fuselage (not shown) of an aircraft, the wing 2 having a wing end 4, to which a wing tip device 6 is mounted. Exemplarily, the wing tip device 6 comprises a planar winglet 8 as well as a curved transition region 10 extending between a connection region 12 of the planar winglet 8 and the wing end 4 of the wing 2. The planar winglet 8 extends at an almost upright angle to an x-y-plane of the aircraft. The wing tip device 6 produces an additional structural load on the aircraft structure due to aerodynamic and mass forces, depending on the actual flight state. Exemplarily, the wing tip device 6 is shown in a flight state.

Exemplarily, a wing-like element 14 is placed on a lower side of the transition region 10 and extends in a span-wise direction, thereby leading to an increase in wing span. As indicated by a dash-dotted line, the wing-like device 14 is rotatable about a rotational axis 16, which is explained in further detail below. The wing-like element 14 comprises a leading edge 18 and a trailing edge 20, wherein the leading edge 18 faces into the flight direction x.

When the wing-like element 14 is exposed to an airflow in flight, a lift force perpendicular to the oncoming flow direction is exerted. Depending on the orientation of the wing-like element 14, i.e. the incidence angle, the lift force varies. Due to the arrangement of the wing-like element as shown in this example, a force around the x-axis of the aircraft is created, which acts on the wing 2. By adjusting the course of the incidence angle of the wing-like element 14, certain flow conditions lead to providing such a moment on the wing 2, which partially compensates those structural loads, which occur from the wing tip device 6.

The wing-like element 14 may extend in a downward and outward direction, such that exemplarily the rotational axis 16 comprises an angle β to the lateral (y) axis of the aircraft, which angle β may be in a range of 100° to 170° and preferably in a range of 115° to 135°.

In Fig. 1b the orientation of the rotational axis 16 is explained in more detail. According to e.g. ISO 1151-2, a fixed coordinate system with the principal axes x, y and z may be defined relative to the aircraft, to which the wing tip device 6 is attached. For the wing-like element 14 an auxiliary coordinate system may be defined comprising the axes x1, y1 and z1. The x1-axis is exemplarily on the x-z-plane of the fixed coordinate system of the aircraft and may be aligned to a chord 15 of the wing-like element 14. The y1-axis is perpendicular to the x1-axis and may be defined in a plane spanned up by an inner point P1 of the trailing edge 20 and by a tangent at an inner point P2 of the leading edge 18. Exemplarily, the rotational axis 16 may be parallel to the y1-axis or vice versa. Still further, for the sake of completeness, a z1-axis is perpendicular to the x1- and y1-axis according to the right-hand rule.

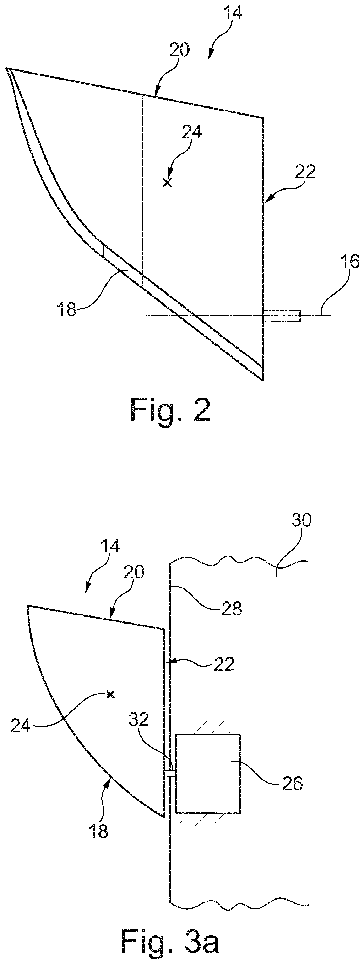

Fig. 2 shows the wing-like element 14 from a top view. Here, the shape of the wing-like element 14 is defined by the leading edge 18, which comprises an angle of about 45° to an auxiliary y-axis y1 in a first lateral section, which angle increases in a span-wise direction. A wing root 22 defines the auxiliary x-axis x1, from which wing root 22 the trailing edge 20 extends, which intersects with the leading edge 18. The plan form of the wing-like element 14 is therefore exemplarily triangular-like. Of course, all other shapes are suitable depending on the installation position as well as flight parameters.

In dependence of the stiffness of the wing, the sweep of the wing, the chordwise position of the wing-like element and the geometric form of the wing-like element, the rotational axis 16 comprises a certain position along the auxiliary x-axis x1, which is chosen to be forward or backward of the aerodynamic center 24, Hence, a lift force exerted on the wing-like element 14 may be considered acting on the aerodynamic center 24, such that an increase in lift leads to a rotation around the rotational axis 16, such that the incidence angle of the wing-like element 14 is decreased or increased in order to reduce the total aircraft load.

In Fig. 3a, the installation of the wing-like element 14 is schematically shown. Here, a torque control means 26 is present, which is fixedly attached to a structure 28 of the aircraft 30. An interface means 32 in form of a shaft connection, protrudes into or outside of the structure 28 and is connected to the wing root 22 of the wing-like element. The torque control means 26 is adapted for allowing a certain rotation depending on the torque introduced by the wing-like element 14. This means that with rising torque, a greater degree of rotation is allowed.

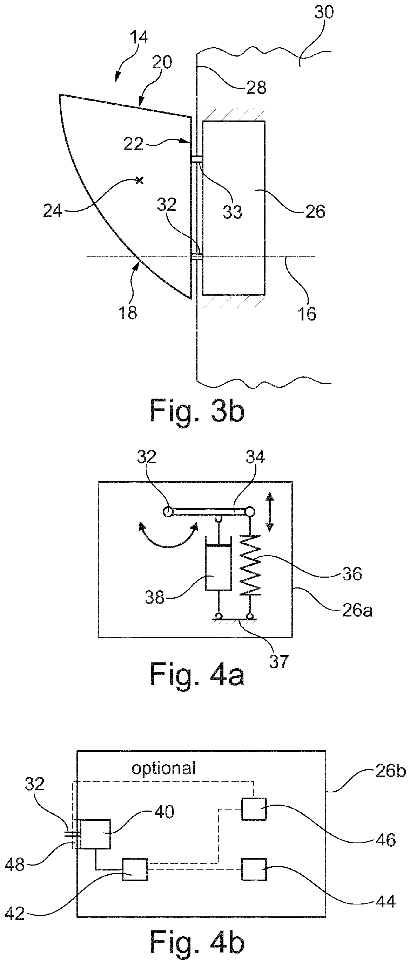

Fig. 3b shows another example, in which the interface means 32 is supported by a further connecting element 33 extending between another point of the wing root 22 of the wing-like element 14 and the torque control means 26 for counteracting a torque introduced by the wing-like element 14. For example, the connecting element 33 may be a wire or another longitudinal element capable of exemplarily transferring a tensioning force.

Fig. 4a shows a first exemplary embodiment of a torque control means 26 with a lever 34 connected to the interface means 32, to which lever 34 a spring 36 is attached, such that the spring 36 is expanded or compressed upon rotation of the interface means 32. Further, a damping unit 38 is connected to the lever 34, such that a parallel connection to the spring 36 is created. Hence, the motion of the interface means 32 is damped. Both the spring 36 and the damping unit 38 are also coupled with a structurally fixed point 37 of the aircraft 50, such as from a wing tip device, wing or fuselage.

The greater the torque introduced into the interface means 32 is, the more the spring 36 will be compressed (or expanded), such that a relationship between torque and rotational angle of the interface means 32 is created. Depending on the characteristics of the spring 36 which may be a linear or a progressive characteristic, the rotatability of the interface means 32 and, consequently, of the wing-like element 14 can be adjusted.

Fig. 4b shows another example, not covered by the claims, of a torque control means 26b, which comprises a rotary actuator 40, such as an electric (step) motor, which is coupled with a control unit 42, which in turn is connected to a power source 44 as well as a control command source 46, which may be a flight control computer, a control unit integrated into a load alleviation system or any other possible source, which may also be indicative of a torque introduced into the interface means 32, such as from a torque sensor 48 attached to the interface means 32.

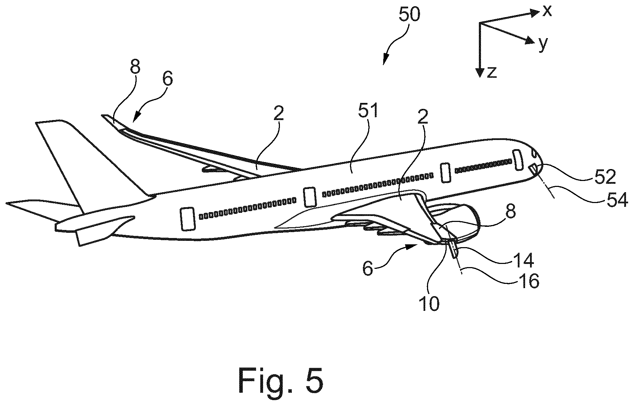

Finally, Fig. 5 shows an aircraft 50 having a fuselage 51 and a wing 2, to which a wing tip device 6 is attached. The aircraft 50 is equipped with a wing-like element 14 at a wing tip device 6 according to the above.

Still further, as another exemplary embodiment, a canard wing 52 may be arranged in a forward portion of the fuselage of the aircraft, which may be rotatable in the same or similar manner around a rotational axis 54 as the rotatable wing-like element 14 around the rotational axis 16 at the wing tip device.

In addition, it should be pointed out that "comprising" does not exclude other elements or steps, and "a" or "an" does not exclude a plural number.

Reference characters in the claims are not to be interpreted as limitations.

## Claims

1. An aircraft (50) comprising
- a fuselage (51),
- a wing (2) attached to the fuselage (51),
- a wing tip device (6) attached to a wing end (4) of the wing (2),
- at least one additional wing-like element (14,52) having a wing root (22), a wing leading edge (18) and a wing trailing edge (20), and
- a passive torque control device (26) having a rotatable interface means (32),
wherein the torque control device (26) is adapted for rotatably supporting the wing root (22) of the wing-like element (14, 52) on the interface means (32) under creation of a rotational axis (16, 54) extending from the interface means (32) into the wing-like element (14, 52), about which rotational axis (16, 54) the wing-like element (14) is rotatable,
wherein the wing-like element (14, 52) is adapted to induce a rotation around the rotational axis (16, 54) in an air flow,
wherein the torque control device (26) is adapted to limit the degree of rotation depending on a torque introduced into the interface means (32) by the wing-like element (14, 52) and
wherein the wing root (22) of the at least one wing-like element (14, 52) is coupled with the wing tip device (6) or the fuselage (51) through the torque control device (26) such that the leading edge (18) extends into an airflow surrounding the aircraft (50).

2. The aircraft (50) of claim 1,
wherein the rotational axis (16, 54) extends essentially perpendicular to the wing root (22) of the wing-like element (14, 52).

3. The aircraft (50) of claim 2,
wherein the rotational axis (16, 54) extends through a point in a distance to an aerodynamic center (24) of the wing-like element (14, 52) relative to the leading edge (18).

4. The aircraft of claim 3,
wherein the distance to the aerodynamic center is at least 5% of a chord of the wing root (22) of the wing-like element (14, 52).

5. The aircraft (50) of any of the previous claims,
wherein the torque control device (26) comprises at least one spring (36) coupled with the rotatable interface means (32) and a structurally fixed point (37) of the aircraft (50) in a manner that a rotation of the rotatable interface means (32) leads to compression or expansion of the at least one spring (36).

6. The aircraft (50) of claim 5,
wherein the torque control device (26) further comprises a damping unit (38) in a parallel connection to the at least one spring (36).

7. The aircraft (50) of any of the previous claims,
wherein the at least one wing-like element (14, 52) is arranged in a transition region (10) of the wing tip device (6).

8. The aircraft (50) of claim 7,
wherein the wing (2) comprises two wing halves, wherein each wing half comprises a wing tip device (6),
wherein both wing tip devices (6) comprise at least one wing-like element (14, 52).

9. The aircraft (50) of claim 7 or 8,
wherein the wing-like element (14, 52) extends over the wing tip device (6) in a spanwise direction at least during a cruise flight condition.

10. The aircraft (50) of claim 9,
wherein the wing-like element (14, 52) does not extend over the wing tip device (6) in a spanwise direction when on ground.

11. The aircraft (50) of any of the claims 7 to 10,
wherein the rotational axis (16, 54) of the at least one wing-like element (14, 52) extends at an angle of at least 10° to a vertical and of at least 10° to a horizontal plane of the aircraft.

12. The aircraft (50) of any of the previous claims,
wherein the rotational axis (16, 54) of the at least one wing-like element (14, 52) extends perpendicular to a longitudinal axis of the aircraft.

13. The aircraft (50) of any of the previous claims,
comprising a wing-like element (14, 52) at a forward portion of the fuselage (51) forward of the wing (2).

## Patentansprüche

1. Flugzeug (50), umfassend
- einen Rumpf (51),
- eine an dem Rumpf (51) angebrachte Tragfläche (2),
- eine an einem Tragflächenende (4) der Tragfläche (2) angebrachte Tragflächenspitzenvorrichtung (6),
- mindestens ein zusätzliches tragflächenartiges Element (14, 52) mit einer Tragflächenwurzel (22), einem vorderen Tragflächenrand (18) und einem hinteren Tragflächenrand (20) und
- eine passive Momentensteuerungsvorrichtung (26) mit einem drehbaren Koppelmittel (32),
wobei die Momentensteuerungsvorrichtung (26) dazu ausgeführt ist, die Tragflächenwurzel (22) des tragflächenartigen Elements (14, 52) unter Erzeugung einer sich von dem Koppelmittel (32) in das tragflächenartige Element (14, 52) erstreckenden Rotationsachse (16, 54) drehbar an dem Koppelmittel (32) zu stützen, wobei das tragflächenartige Element (14) um die Rotationsachse (16, 54) drehbar ist,
wobei das tragflächenartige Element (14, 52) dazu ausgeführt ist, in einer Luftströmung eine Drehung um die Rotationsachse (16, 54) herum einzuleiten, wobei die Momentensteuerungsvorrichtung (26) dazu ausgeführt ist, den Rotationsgrad in Abhängigkeit von einem durch das tragflächenartige Element (14, 52) in das Koppelmittel (32) eingeführten Drehmoment zu begrenzen, und
wobei die Tragflächenwurzel (22) des mindestens einen tragflächenartigen Elements (14, 52) durch die Momentensteuerungsvorrichtung (26) mit der Tragflächenspitzenvorrichtung (6) oder dem Rumpf (51) gekoppelt ist, so dass sich der vordere Rand (18) in eine das Flugzeug (50) umgebende Luftströmung erstreckt.

2. Flugzeug (50) nach Anspruch 1,
wobei sich die Rotationsachse (16, 54) im Wesentlichen senkrecht zu der Tragflächenwurzel (22) des tragflächenartigen Elements (14, 52) erstreckt.

3. Flugzeug (50) nach Anspruch 2,
wobei sich die Rotationsachse (16, 54) durch einen Punkt in einem Abstand zu einer aerodynamischen Mitte (24) des tragflächenartigen Elements (14, 52) bezüglich des vorderen Rands (18) erstreckt.

4. Flugzeug nach Anspruch 3,
wobei der Abstand zu der aerodynamischen Mitte mindestens 5% einer Sehne der Tragflächenwurzel (22) des tragflächenartigen Elements (14, 52) beträgt.

5. Flugzeug (50) nach einem der vorhergehenden Ansprüche,
wobei die Momentensteuerungsvorrichtung (26) mindestens eine Feder (36) umfasst, die so mit dem drehbaren Koppelmittel (32) und einem strukturell festgelegten Punkt (37) des Flugzeugs (50) gekoppelt ist, dass eine Drehung des drehbaren Koppelmittels (32) zu dem Einfedern oder Ausfedern der mindestens einen Feder (36) führt.

6. Flugzeug (50) nach Anspruch 5,
wobei die Momentensteuerungsvorrichtung (26) ferner eine Dämpfungseinheit (38) in einer parallelen Verbindung zu der mindestens einen Feder (36) umfasst.

7. Flugzeug (50) nach einem der vorhergehenden Ansprüche,
wobei das mindestens eine tragflächenartige Element (14, 52) in einem Übergangsbereich (10) der Tragflächenspitzenvorrichtung (6) angeordnet ist.

8. Flugzeug (50) nach Anspruch 7,
wobei die Tragfläche (2) zwei Tragflächenhälften umfasst, wobei jede Tragflächenhälfte eine Tragflächenspitzenvorrichtung (6) umfasst,
wobei beide Tragflächenspitzenvorrichtungen (6) mindestens ein tragflächenartiges Element (14, 52) umfassen.

9. Flugzeug (50) nach Anspruch 7 oder 8,
wobei sich das tragflächenartige Element (14, 52) mindestens während eines Reiseflugzustands in einer Spannweitenrichtung über die Tragflächenspitzenvorrichtung (6) erstreckt.

10. Flugzeug (50) nach Anspruch 9,
wobei sich das tragflächenartige Element (14, 52) am Boden nicht in Spannweitenrichtung über die Tragflächenspitzenvorrichtung (6) erstreckt.

11. Flugzeug (50) nach einem der Ansprüche 7 bis 10,
wobei sich die Rotationsachse (16, 54) des mindestens einen tragflächenartigen Elements (14, 52) in einem Winkel von mindestens 10° zu einer vertikalen Ebene und von mindestens 10° zu einer horizontalen Ebene des Flugzeugs erstreckt.

12. Flugzeug (50) nach einem der vorhergehenden Ansprüche,
wobei sich die Rotationsachse (16, 54) des mindestens einen tragflächenartigen Elements (14, 52) senkrecht zu einer Längsachse des Flugzeugs erstreckt.

13. Flugzeug (50) nach einem der vorhergehenden Ansprüche,
umfassend ein tragflächenartiges Element (14, 52) an einem vorderen Abschnitt des Rumpfs (51) vor der Tragfläche (2).

## Revendications

1. Aéronef (50) comprenant :
- un fuselage (51),
- une aile (2) attachée au fuselage (51),
- un dispositif de saumon d'aile (6) attaché à une extrémité d'aile (4) de l'aile (2),
- au moins un élément supplémentaire de type aile (14, 52) ayant une emplanture d'aile (22), un bord d'attaque d'aile (18) et un bord de fuite d'aile (20), et
- un dispositif de commande de couple passif (26) ayant un moyen d'interface rotatif (32),
le dispositif de commande de couple (26) étant prévu pour supporter de manière rotative l'emplanture d'aile (22) de l'élément de type aile (14, 52) sur le moyen d'interface (32) en créant un axe de rotation (16, 54) s'étendant depuis le moyen d'interface (32) jusque dans l'élément de type aile (14, 52), autour duquel axe de rotation (16, 54) peut tourner l'élément de type aile (14), l'élément de type aile (14, 52) étant prévu pour induire dans un flux d'air une rotation autour de l'axe de rotation (16, 54),
le dispositif de commande de couple (26) étant prévu pour limiter le degré de rotation en fonction d'un couple introduit dans le moyen d'interface (32) par l'élément de type aile (14, 52) et
l'emplanture d'aile (22) de l'au moins un élément de type aile (14, 52) étant accouplée au dispositif de saumon d'aile (6) ou au fuselage (51) par le dispositif de commande de couple (26) de telle sorte que le bord d'attaque (18) s'étende dans un flux d'air entourant l'aéronef (50).

2. Aéronef (50) selon la revendication 1,
dans lequel l'axe de rotation (16, 54) s'étend essentiellement perpendiculairement à l'emplanture d'aile (22) de l'élément de type aile (14, 52).

3. Aéronef (50) selon la revendication 2,
dans lequel l'axe de rotation (16, 54) s'étend à travers un point à une distance d'un centre aérodynamique (24) de l'élément de type aile (14, 52) par rapport au bord d'attaque (18).

4. Aéronef selon la revendication 3,
dans lequel la distance au centre aérodynamique est au moins 5 % d'une corde de l'emplanture d'aile (22) de l'élément de type aile (14, 52).

5. Aéronef (50) selon l'une quelconque des revendications précédentes,
dans lequel le dispositif de commande de couple (26) comprend au moins un ressort (36) accouplé au moyen d'interface rotatif (32) et à un point structurellement fixe (37) de l'aéronef (50) de manière à ce qu'une rotation du moyen d'interface rotatif (32) conduise à la compression ou à la détente de l'au moins un ressort (36).

6. Aéronef (50) selon la revendication 5,
dans lequel le dispositif de commande de couple (26) comprend en outre une unité d'amortissement (38) connectée en parallèle à l'au moins un ressort (36).

7. Aéronef (50) selon l'une quelconque des revendications précédentes,
dans lequel l'au moins un élément de type aile (14, 52) est disposé dans une région de transition (10) du dispositif de saumon d'aile (6).

8. Aéronef (50) selon la revendication 7,
dans lequel l'aile (2) comprend deux moitiés d'aile, chaque moitié d'aile comprenant un dispositif de saumon d'aile (6),
les deux dispositifs de saumon d'aile (6) comprenant au moins un élément de type aile (14, 52).

9. Aéronef (50) selon la revendication 7 ou 8,
dans lequel l'élément de type aile (14, 52) s'étend par-dessus le dispositif de saumon d'aile (6) dans une direction d'envergure au moins dans un état de vol de croisière.

10. Aéronef (50) selon la revendication 9,
dans lequel l'élément de type aile (14, 52) ne s'étend pas par-dessus le dispositif de saumon d'aile (6) dans une direction d'envergure lorsque l'aéronef est au sol.

11. Aéronef (50) selon l'une quelconque des revendications 7 à 10,
dans lequel l'axe de rotation (16, 54) de l'au moins un élément de type aile (14, 52) s'étend suivant un angle d'au moins 10° par rapport à un plan vertical et d'au moins 10° par rapport à un plan horizontal de l'aéronef.

12. Aéronef (50) selon l'une quelconque des revendications précédentes,
dans lequel l'axe de rotation (16, 54) de l'au moins un élément de type aile (14, 52) s'étend perpendiculairement à un axe longitudinal de l'aéronef.

13. Aéronef (50) selon l'une quelconque des revendications précédentes,
comprenant un élément de type aile (14, 52) au niveau d'une portion avant du fuselage (51) en avant de l'aile (2).
